# EUROPEAN PATENT SPECIFICATION

(11) **EP 2 624 548 B1**
(45) Date of publication and mention of the grant of the patent: **21.08.2019**
(21) Application number: 11828911.5
(22) Date of filing: 22.09.2011
(51) Int. Cl.: H04N 7/173, H04H 20/10

(54) **RECEIVING DEVICE, RECEIVING METHOD, AND PROGRAM**
EMPFANGSVORRICHTUNG, EMPFANGSVERFAHREN UND PROGRAMM DAFÜR
DISPOSITIF DE RÉCEPTION, PROCÉDÉ DE RÉCEPTION ET PROGRAMME ASSOCIÉ

(30) Priority: 03.06.2011 US 201161493145 P; 01.10.2010 US 388999 P
(43) Date of publication of application: 07.08.2013
(73) Proprietor: Saturn Licensing LLC, New York, NY 10022-3211 (US)
(72) Inventor: KITAZATO, Naohisa, Tokyo 108-0075 (JP); DEWA, Yoshiharu, Tokyo 108-0075 (JP)
(74) Representative: Witte, Weller & Partner Patentanwälte mbB
(86) International application number: PCT/JP2011/071567
(87) International publication number: WO 2012/043354

(56) References cited:
- JP-A- 2003 009 113
- JP-A- 2003 530 033
- US-A1- 2003 033 157
- US-A1- 2007 169 164
- US-A1- 2008 120 638
- US-A1- 2012 011 261

## Description

### [Technical Field]

The present technology relates to a receiver, reception method and program and, more particularly, to a receiver, reception method and program which can provide high quality services through merger between broadcasting and communication.

### [Background Art]

Global needs are growing to deliver new advanced services by merging broadcasting, a media for multi-destination delivery, with communication composed almost exclusively of individual on-demand services. Services customized to viewers using the individuality of communication are in demand.

Some technological schemes have already been established. As a result, the preparation of standards and the implementation of services are under way (refer, for example, to PTL 1).

### [Citation List]

### [Patent Literature]

[PTL 1]
JP 2006-245653A

US 2003033157 (A1) relates to an enhanced custom content television.

This document does not disclose, at least, a receiver having a trigger extraction section adapted to extract trigger information relating to control over an application program to be executed in response to broadcasting content, the trigger information being transmitted together with the received broadcasting content, wherein an acquisition section of the receiver acquires insertion content based on the extracted trigger information.

US 2008/120638 (A1) relates to a content injection system and methodology.

Further prior art can be found in US 2012/0011261 A1.

### [Summary]

### [Technical Problem]

The probable forms of services whose implementation is already under way include viewing an image-based web page relating to a broadcasting service and streamed AV content together with a broadcasting program, leaving the broadcasting program once to view the web page and AV content, or viewing the web page and AV content after the broadcasting program, by viewer's selection.

In these forms, communication-based services are no more than broadcasting-related additional services adapted to interpolate broadcasting. On the other hand, a methodology has been under study, as the way a merger between broadcasting and communication ought to be, in which switching is made to customized communication content as part of a broadcasting program. However, no technological scheme for a specific service model has yet to be established.

The present technology has been devised in light of the foregoing, and it is an object of the present technology to provide high quality services through merger between broadcasting and communication.

### [Solution to Problem]

According to the present invention a receiver as defined in claim 1 and a reception method as defined in claim 6 are presented. Preferred embodiments are defined in the dependent claims.

The receiver may be a standalone device. Alternatively, the receiver may be an internal block making up a single device.

A reception method or program according to an aspect of the present technology is a reception method or program for the receiver according to an aspect of the present technology as described above.

In the receiver, reception method and program according to the present technology, broadcasting content broadcast via a broadcasting network is received. Insertion content inserted during reception of the broadcasting content is acquired. The broadcasting content or insertion content is output. Content to be output from an output destination is switched between the broadcasting and insertion content. Data of the received broadcasting content is sequentially stored if the broadcasting content is switched over to the insertion content. The stored broadcasting content is output while the insertion content is output if the insertion content is switched over to the broadcasting content.

### [Advantageous Effect of Invention]

An aspect of the present technology provides high quality services through merger between broadcasting and communication.

### [Brief Description of Drawings]

Fig. 1 is a diagram illustrating a configuration example of a broadcasting system.
Fig. 2 is a diagram illustrating a configuration example of a broadcasting apparatus.
Fig. 3 is a diagram illustrating a configuration example of a receiver.
Fig. 4 is a diagram illustrating the items included in trigger information as a Register command.
Fig. 5 is a diagram illustrating the items included in trigger information of an Execute command.
Fig. 6 is a diagram illustrating the items included in trigger information of an Inject_event command.
Fig. 7 is a diagram illustrating the items included in trigger information of a Suspend command.
Fig. 8 is a diagram illustrating the items included in trigger information of a Terminate command.
Fig. 9 is a diagram illustrating an example of syntax of trigger information.
Fig. 10 is a diagram illustrating an example of an operation scenario.
Fig. 11 is a diagram describing modes during switching between broadcasting and communication content.
Fig. 12 is a diagram illustrating an operation example of the receiver when pass-through mode is selected.
Fig. 13 is a diagram illustrating an operation example of the receiver when retention mode is selected.
Fig. 14 is an example of writing an application in pass-through mode.
Fig. 15 is an example of writing an application in retention mode.
Fig. 16 is a flowchart describing the handling of trigger.

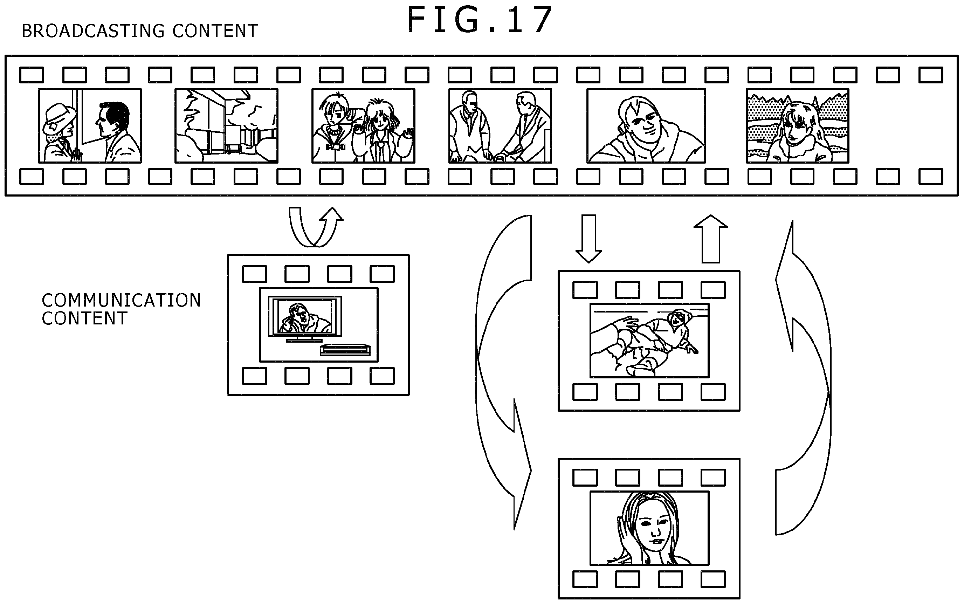

Fig. 17 is a diagram illustrating an example of a first use case.
Fig. 18 is a diagram illustrating an example of a second use case.
Fig. 19 is a diagram illustrating a configuration example of a computer.

### [Description of Embodiments]

A description will be given below of an embodiment of the present technology with reference to the accompanying drawings.

### [Configuration Example of the Broadcasting System]

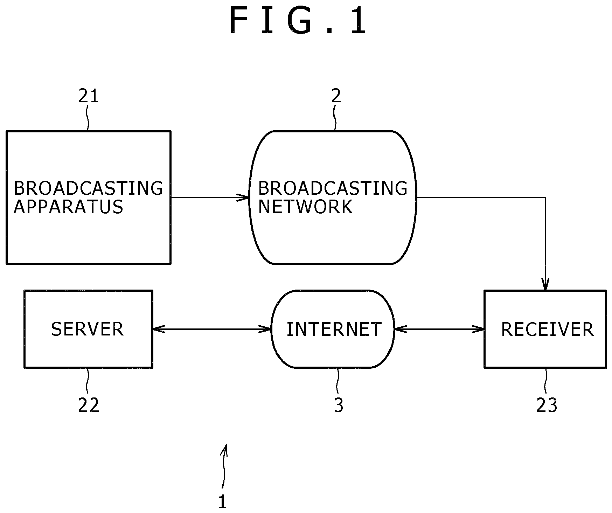

Fig. 1 is a diagram illustrating a configuration example of a broadcasting system.

A broadcasting system 1 includes a broadcasting apparatus 21 and server 22 provided on the broadcasting side and a receiver 23 provided on the receiving side.

The broadcasting apparatus 21 transmits a digital television broadcasting signal via a broadcasting network 2 such as a digital terrestrial broadcasting network. Broadcasting content such as programs and CMs is transmitted using this digital television broadcasting signal.

Further, the broadcasting apparatus 21 transmits trigger information as contained in a digital television broadcasting signal. Trigger information serves as a command relating to the operation of an application program (hereinafter referred to as an application) in response to broadcasting content. More specifically, trigger information is carried in a transport stream (hereinafter referred to as a TS) of a digital television broadcasting signal or embedded in a video or audio signal for transmission.

Trigger information includes not only information indicating the command type but also that indicating the acquirer of the application. Trigger information will be described in detail later.

The server 22 supplies an application in response to a request from the receiver 23 that accessed the server 22 via an Internet 3.

The receiver 23 receives a digital television broadcasting signal from the broadcasting apparatus 21 and outputs the video image and sound of the broadcasting content to a monitor (not shown). Further, the receiver 23 accesses the server 22 via the Internet 3, thus acquiring communication content. It should be noted that the receiver 23 may be standalone or incorporated, for example, in a television receiver or video recorder.

The broadcasting system 1 is configured as described above.

### [Configuration Example of the Broadcasting Apparatus]

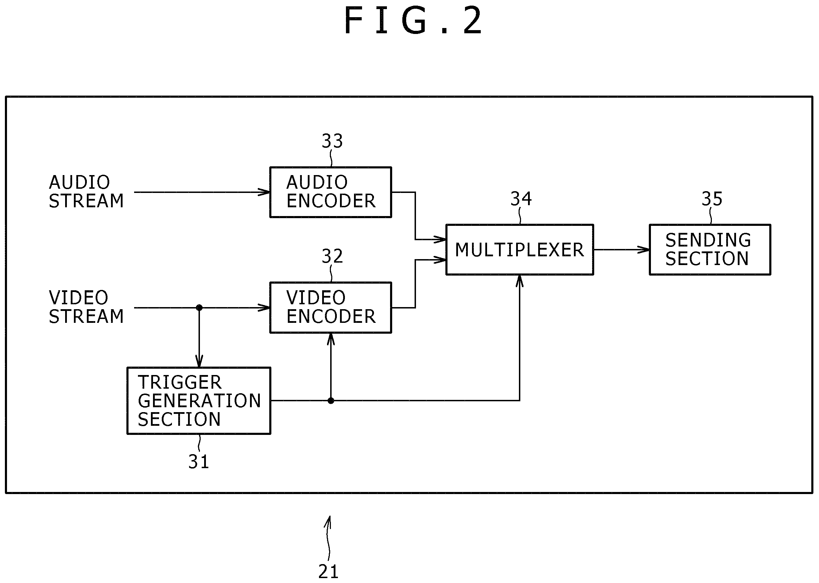

Fig. 2 is a diagram illustrating a configuration example of the broadcasting system.

The broadcasting apparatus 21 includes a trigger generation section 31, video encoder 32, audio encoder 33, multiplexer 34 and sending section 35.

The trigger generation section 31 generates trigger information in response to the progress of a video stream of broadcasting content such as program and CM supplied from the previous stage, outputting the trigger information to the video encoder 32 and multiplexer 34.

The video encoder 32 codes the video stream of broadcasting content such as program supplied from the previous stage according to a given encoding scheme, supplying the resultant coded video stream to the multiplexer 34. It should be noted that among encoding schemes used by the video encoder 32 are MPEG2 (Moving Picture Experts Group phase 2) and H.264.

Further, the video encoder 32 embeds the trigger information from the trigger generation section 31 when encoding the video stream, outputting the resultant coded video stream to the multiplexer 34.

The audio encoder 33 codes the audio stream for the video stream supplied from the video encoder 32 according to a given encoding scheme, supplying the resultant coded audio stream to the multiplexer 34. It should be noted that among encoding schemes used by the audio encoder 33 are AC3 (Audio Code number 3) scheme and AAC (Advanced Audio Coding).

The multiplexer 34 is supplied with a coded video stream from the video encoder 32, a coded audio stream from the audio encoder 33 and trigger information from the trigger generation section 31.

The multiplexer 34 multiplexes not only the coded video and audio streams but also the trigger information, supplying the resultant multiplexed stream to the sending section 35. More specifically, for example, the multiplexer 34 multiplexes the streams and trigger information into a TS. Alternatively, the multiplexer 34 may multiplex the streams and trigger information into a suitable ISO base media file format (MP4) in consideration of network delivery of digital television broadcasting.

The sending section 35 sends the multiplexed stream supplied from the multiplexer 34 as a digital television broadcasting signal.

The broadcasting apparatus 21 is configured as described above.

It should be noted that although not only embedded in a video stream but also multiplexed into a multiplexed stream in the above description, trigger information may be either embedded in a video stream or multiplexed into a multiplexed stream. Further, trigger information can be transmitted in a different way, including, for example, being embedded in an audio stream.

### [Configuration Example of the Receiver]

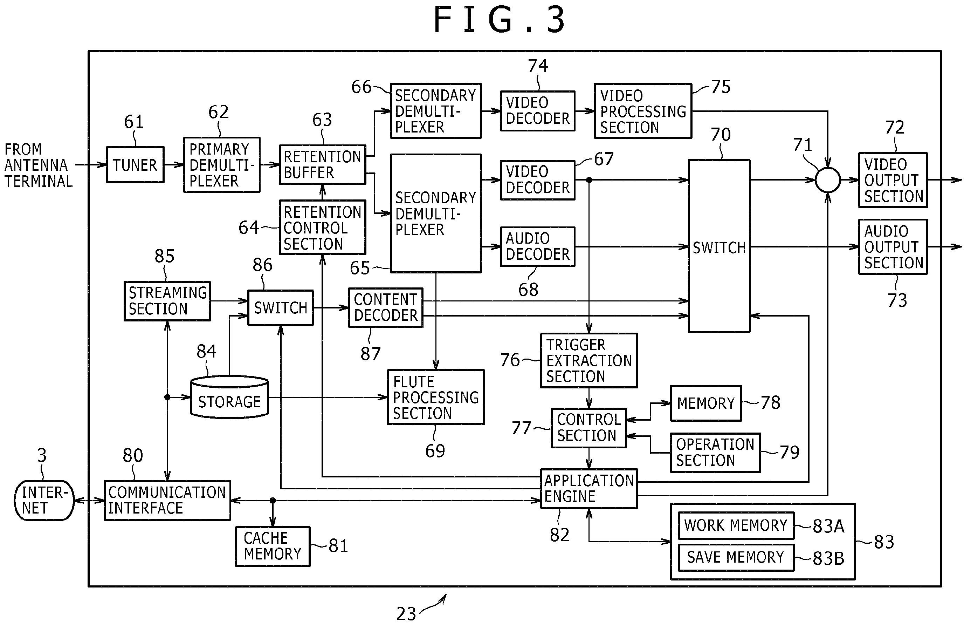

Fig. 3 is a diagram illustrating a configuration example of the receiver.

The receiver 23 includes a tuner 61, primary demultiplexer 62, retention buffer 63, retention control section 64, secondary demultiplexers 65 and 66, video decoders 67 and 74, audio decoder 68, FLUTE processing section 69, switch 70, combining section 71, video output section 72, audio output section 73, video processing section 75, trigger extraction section 76, control section 77, memory 78, operation section 79, communication interface 80, cache memory 81, application engine 82, application memory 83, storage 84, streaming section 85, switch 86 and content decoder 87.

The tuner 61 receives and demodulates a digital television broadcasting signal, supplying the resultant multiplexed stream to the primary demultiplexer 62.

The primary demultiplexer 62 extracts the TS of a user-selected specific channel from the multiplexed stream supplied from the tuner 61, supplying the TS to the retention buffer 63.

The retention buffer 63 includes, for example, a large-capacity storage media such as HDD (Hard Disk Drive) or memory. The same buffer 63 sequentially stores the TS (TS data) supplied from the primary demultiplexer 62 under control of the retention control section 64.

The TS stored in the retention buffer 63 is read therefrom and supplied to the secondary demultiplexers 65 under control of the retention control section 64. It should be noted that if a so-called subscreen is displayed, the TS stored in the retention buffer 63 is supplied to the secondary demultiplexer 65 as data to be displayed on the subscreen.

The retention control section 64 controls the retention buffer 63 under control of the application engine 82.

The secondary demultiplexer 65 separates the TS supplied from the retention buffer 63, supplying the separated coded video and audio streams to the video decoder 67 and audio decoder 68, respectively. Further, the secondary demultiplexer 65 extracts a TS packet which is assigned a given identifier from the TS supplied from the retention buffer 63, supplying the data to the FLUTE processing section 69.

The video decoder 67 decodes the coded video stream from the secondary demultiplexer 65, supplying the resultant video signal to the switch 70 and trigger extraction section 76. It should be noted that the video decoder 67 decodes the video stream according to the scheme compatible with the coding scheme of the video encoder 32 (Fig. 2).

The audio decoder 68 decodes the coded audio stream from the secondary demultiplexer 65, supplying the resultant audio signal to the switch 70. It should be noted that the audio decoder 68 decodes the audio stream according to the scheme compatible with the coding scheme of the audio encoder 33 (Fig. 2).

The switch 70 is supplied with not only the video signal from the video decoder 67 and the audio signal from the audio decoder 68 but also video and audio signals from the content decoder 87 which will be described later.

The switch 70 supplies, under control of the application engine 82, either the video signal from the video decoder 67 or that from the content decoder 87 to the combining section 71. Further, the switch 70 supplies, under control of the application engine 82, either the audio signal from the audio decoder 68 or that from the content decoder 87 to the audio output section 73.

The secondary demultiplexer 66 is supplied with a TS from the retention buffer 63 if the subscreen is displayed. The same demultiplexer 66 separates the TS supplied from the retention buffer 63, supplying the separated coded video stream to the video decoder 74. The video decoder 74 decodes the coded video stream supplied from the secondary demultiplexer 66 according to the scheme compatible with the coding scheme of the video encoder 32 (Fig. 2), supplying the resultant video signal to the video processing section 75.

The video processing section 75 resizes the video signal supplied from the video decoder 74 to scale down the video image, supplying the resultant video signal to the combining section 71.

The combining section 71 is supplied with not only the video signals from the switch 70 and video processing section 75 but also the video signal of the application from the application engine 82.

The combining section 71 supplies the video signal, supplied from the switch 70, to the video output section 72. Further, if supplied with either or both of the video signal from the video processing section 75 and that of the application from the application engine 82, the combining section 71 combines the video signal from the switch 70 with the supplied video signal or signals, supplying the combined signal to the video output section 72.

The video output section 72 outputs the video signal, supplied from the combining section 71, to the subsequent stage (e.g., display).

The audio output section 73 outputs the audio signal, supplied from the switch 70, to the subsequent stage (e.g., speaker).

The trigger extraction section 76 constantly monitors the video signal supplied from the video decoder 67, extracting the trigger information embedded in the video signal and outputting the trigger information to the control section 77.

It should be noted that if trigger information is contained in PCR (Program Clock Reference) packets of a TS of a digital television broadcasting signal, the trigger extraction section 76 is supplied with PCR packets containing trigger information, extracting the trigger information. On the other hand, if trigger information is embedded in an audio signal, the trigger extraction section 76 is supplied with an audio signal, constantly monitoring the audio signal and extracting trigger information embedded in the audio signal.

The control section 77 executes the control program stored in the memory 78, thus controlling the operation of each of the respective sections of the receiver 23. Further, the control section 77 controls, for example, the acquisition or registration of an application, the activation thereof, the firing of an event, or the suspension or termination of such an application based on the trigger information supplied from the trigger extraction section 76.

The operation section 79 supplies to the control section 77 appropriate operation signals in response to a variety of operations made by the user.

The communication interface 80 connects to the server 22 via the Internet 3 under control of the application engine 82. The application engine 82 acquires an application from the server 22 via the communication interface 80 and Internet 3 under control of the control section 77, storing the application in the cache memory 81.

The application engine 82 reads the application from the cache memory 81 and executes the application under control of the control section 77. The video signal of the active application is supplied to the combining section 71.

The application memory 83 includes a work memory 83A and save memory 83B. The application engine 82 stores data about the active application (more specifically, includes, for example, hierarchical levels of displayed information) in the work memory 83A. Further, if the active application is suspended, the application engine 82 moves the data from the work memory 83A of the application memory 83 to the save memory 83B. Then, if the suspended application is resumed, the application engine 82 moves the data from the save memory 83B back to the work memory 83A, thus restoring the application to its original state before the application was suspended.

The FLUTE processing section 69 acquires files, identified by a FLUTE session, from the TS packet supplied from the secondary demultiplexer 65, recording the data made up of these files to the storage 84 as content data. The storage 84 includes, for example, a large-capacity storage media such as HDD.

Here, the term "FLUTE (File Delivery over Unidirectional Transport)" refers to a communication protocol capable of data delivery using a unidirectional transmission channel (e.g., downstream only channel). FLUTE permits transmission of an arbitrary file. A FLUTE session is identified, for example, in NRT (Non Real Time) broadcasting based on an NRT-IT (NRT Information Table) that includes information about downloading of content. The FLUTE processing section 69 acquires files identified by this FLUTE session. This allows content acquired by NRT broadcasting (hereinafter referred to as NRT content) to be recorded to the storage 84.

It should be noted that the term "NRT broadcasting" refers to a service adapted to reproduce broadcasting content after recording it to a storage once. NRT-IT is described, for example, in Japanese Patent Laid-Open No. 2011-41242 by the present applicant.

On the other hand, the details of FLUTE are defined as RFC3926. Further, the communication interface 80 receives communication content from the server 22 via the Internet 3 under control of the application engine 82. The same interface 80 records the received communication content to the storage 84 under control of the application engine 82 if content is downloaded and reproduced. On the other hand, the communication interface 80 supplies the received communication content to the streaming section 85 under control of the application engine 82 if content is reproduced through streaming.

The streaming section 85 processes the communication content (content data) supplied from the communication interface 80 as required for streaming reproduction, supplying the resultant communication content for streaming reproduction to the switch 86.

The switch 86 is supplied with NRT content or communication content for downloading and reproduction from the storage 84 and communication content for streaming reproduction from the streaming section 85. If content is downloaded and reproduced, the switch 86 selects either NRT content or communication content for downloading and reproduction under control of the application engine 82, supplying the selected content to the content decoder 87. On the other hand, if content is reproduced through streaming, the switch 86 selects communication content for streaming reproduction under control of the application engine 82, supplying the selected content to the content decoder 87. The content decoder 87 separates the coded AV stream making up the NRT content or communication content for downloading and reproduction or the communication content for streaming reproduction into coded video and coded audio streams. The content decoder 87 decodes each of the separated coded video and audio streams, supplying the resultant video and audio signals to the switch 70.

The receiver 23 is configured as described above.

It should be noted that NRT content or communication content for downloading and reproduction or communication content for streaming reproduction is inserted while the receiver 23 receives broadcasting content via the broadcasting network 2. In the present specification, content inserted during reception of any of these pieces of content is referred to as insertion content. In order to facilitate the description, on the other hand, a description will be given below with focus on communication content for streaming reproduction of all pieces of insertion content.

### [Details of Trigger Information]

A detailed description will be given of trigger information. Trigger information is used to control an application. Trigger information includes, for example, Register, Execute, Inject_event, Suspend and Terminate commands.

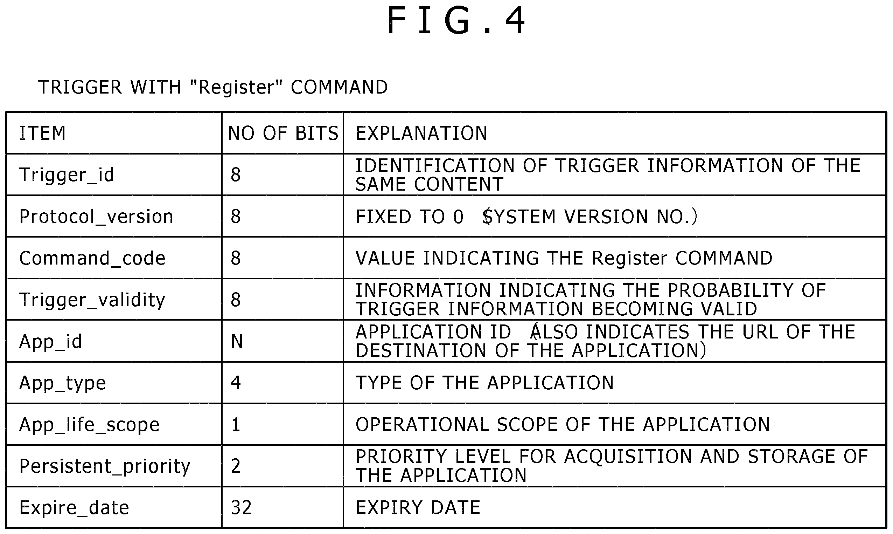

Fig. 4 is a diagram illustrating the items included in trigger information as the Register command. The Register command is designed to instruct the receiver 23 to acquire and register an application. Trigger_id is information used to identify the trigger information in question. If the trigger information having the same content is transmitted a plurality of times, Trigger_id in all the pieces of trigger information is the same. Protocol_version indicates the protocol version of the trigger information in question. Command_code indicates the command type of the trigger information in question. In the case of Fig. 4, Command_code includes information indicating that the command is Register.

Trigger_varidity is a server access distribution parameter that indicates the probability for each of the receivers 23 that have received the trigger information to perform processes in accordance with this trigger information.

App_id is identification information of the application to be acquired for the trigger information in question. Further, App_id indicates the URL of the acquirer of the application (server 22 in this case) for the trigger information in question.

App_type indicates the type (e.g., HTML5 or java) of the application for the trigger information in question. App_life_scop indicates the extent to which the application is operated.

Persistent_priority indicates the priority level for acquiring and storing an associated application. Expire_date indicates the expiry date of the application. When an application is registered, the priority level (Persistent_priority) and expiry date (Expire_date) are stored, thus allowing the application to be managed according to the priority level and expiry date.

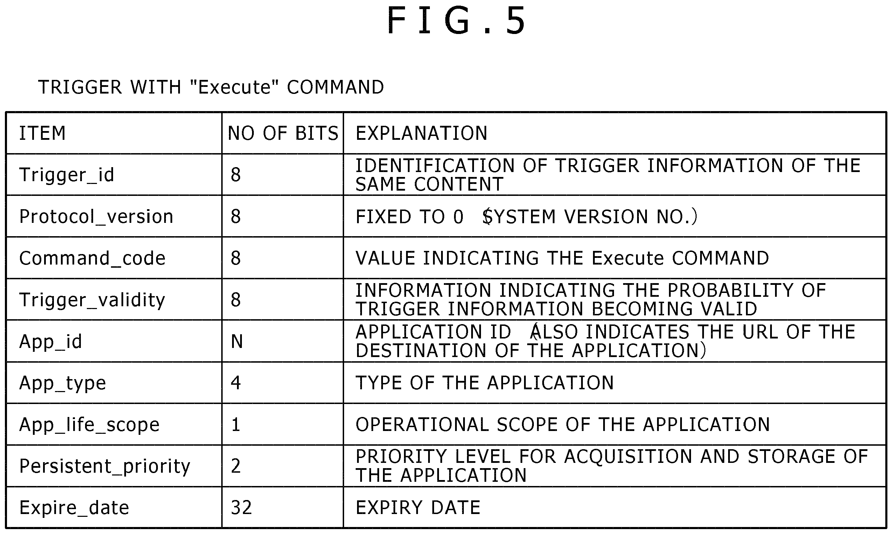

Fig. 5 is a diagram illustrating the items included in trigger information of the Execute command. The Execute command is designed to instruct the receiver 23 to activate an application.

The items included in the trigger information as the Execute command are the same as those in the trigger information as the Register command shown in Fig. 4. It should be noted, however, that Command_code includes information indicating that the command is Execute.

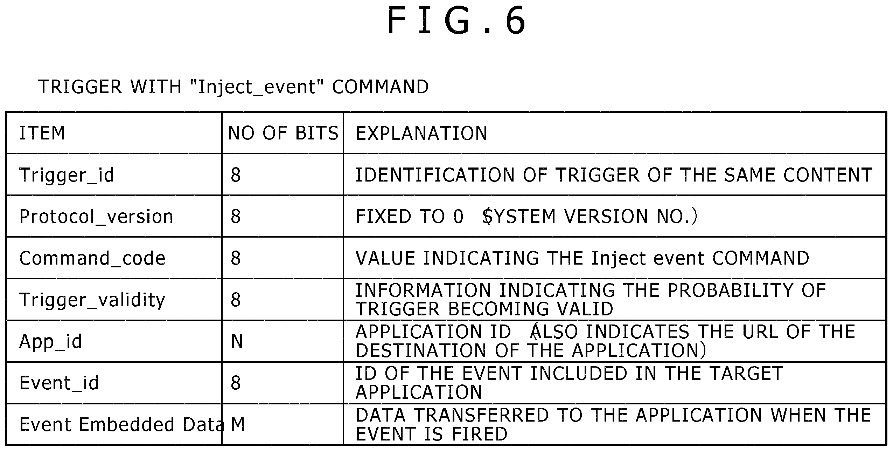

Fig. 6 illustrates the items included in the trigger information as the Inject_event command. The Inject_event command is designed to cause the receiver 23 to fire an event in an active data broadcasting application.

Trigger_id, Protocol_version, Command_code, Trigger_varidity, App_id and App_type are the same as those in the trigger information as the Register command shown in Fig. 4. It should be noted, however, that Command_code includes information indicating that the command is Inject_event.

Event_id is identification information about the event to be fired in the application specified by the App_id. Event Embedded Data includes data referenced when the event is fired.

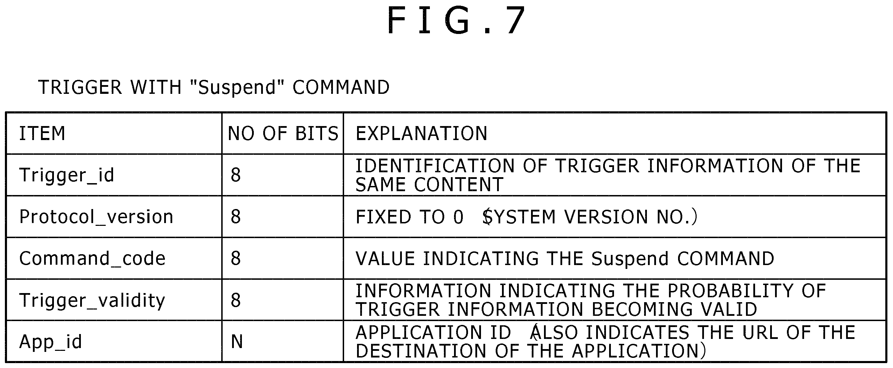

Fig. 7 illustrates the items included in the trigger information as the Suspend command. The Suspend command is designed to cause the receiver 23 to suspend an active data broadcasting application.

Trigger_id, Protocol_version, Command_code, Trigger_varidity and App_id are the same as those in the trigger information as the Register command shown in Fig. 4. It should be noted, however, that Command_code includes information indicating that the command is Suspend.

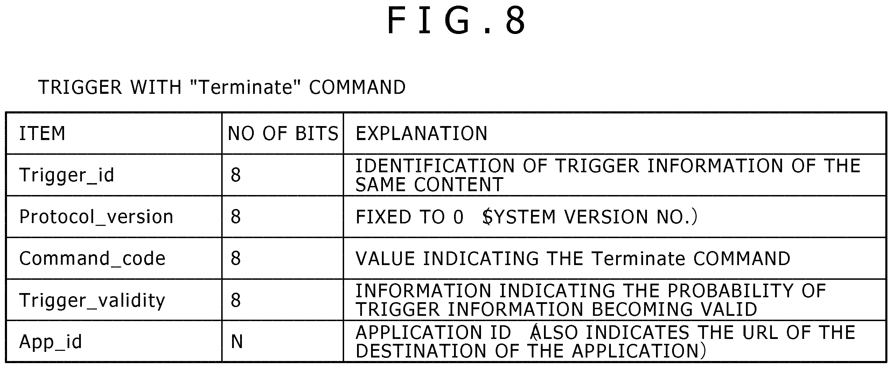

Fig. 8 illustrates the items included in the trigger information as the Terminate command. The Terminate command is designed to cause the receiver 23 to terminate an active application.

Trigger_id, Protocol_version, Command_code, Trigger_varidity and App_id are the same as those in the trigger information as the Register command shown in Fig. 4. It should be noted, however, that Command_code includes information indicating that the command is Terminate.

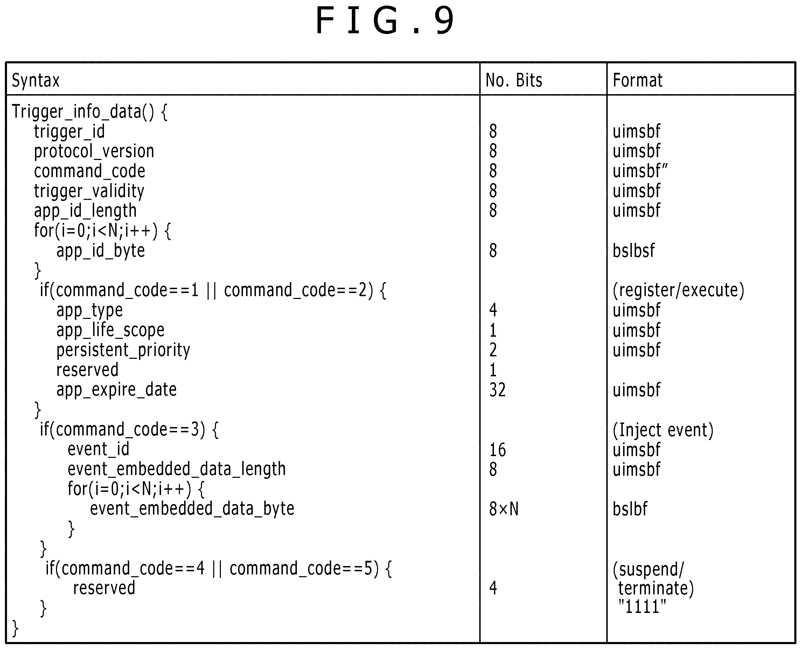

Fig. 9 illustrates an example of trigger information syntax applicable to trigger information of each of the above commands. It should be noted that any syntax can be used for trigger information and that the syntax thereof is not limited to the example shown in Fig. 9.

### [Operation Scenario]

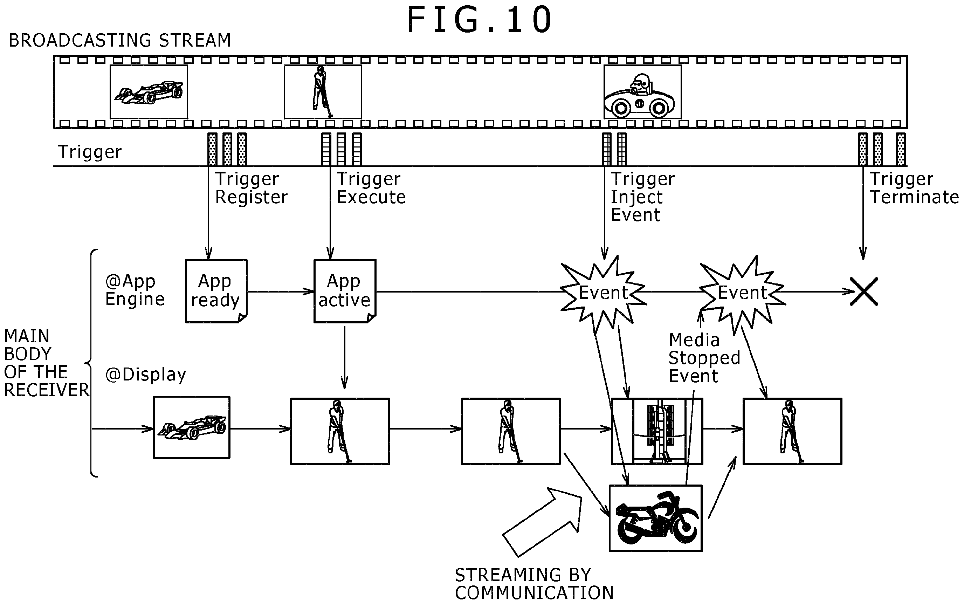

It is possible to operate, for example, an application as shown in Fig. 10 by using the trigger information described above.

When the broadcasting apparatus 21 transmits, in response to the progress of a program (broadcasting content), trigger information of the Register command adapted to instruct the acquisition and registration of the application for the program, the receiver 23 acquires and registers the application after receipt of the trigger information.

Next, when the broadcasting apparatus 21 transmits, in response to the progress of the program, trigger information of the Execute command of the application for the program, the receiver 23 activates the application after receipt of the trigger information.

In this activation, for example, the program image continues to be displayed rather than displaying the application. It should be noted that when the application is activated, for example, an icon may be overlaid on the program image to indicate that the application display is available. In this case, when the icon is selected by the user, the application display is overlaid on the program image on the screen. Next, when the broadcasting apparatus 21 transmits, in response to the progress of the program, trigger information of the Inject event command, the receiver 23 fires the active application after receipt of the trigger information. This firing of an event switches the broadcasting content serving as the program image over to the communication content (insertion content) that is delivered through streaming via the Internet 3, thus allowing the communication content to be reproduced through streaming.

Then, when the reproduction of the communication content through streaming ends, a termination event (MediaStopped Event) is fired, thus switching the communication content over to the broadcasting content and displaying the program image.

Then, when the broadcasting apparatus 21 transmits, in response to the end of the program, trigger information of the Terminate command, the receiver 23 terminates the active application after receipt of the trigger information.

It should be noted that although not shown in Fig. 10, when the broadcasting apparatus 21 transmits trigger information of the Suspend command of the application, the receiver 23 suspends the active application after receipt of the trigger information. Later, when the broadcasting apparatus 21 transmits trigger information of the Execute command of the application, the receiver 23 resumes the suspended application.

### [Example of Operation during Switching between Broadcasting and Communication Content]

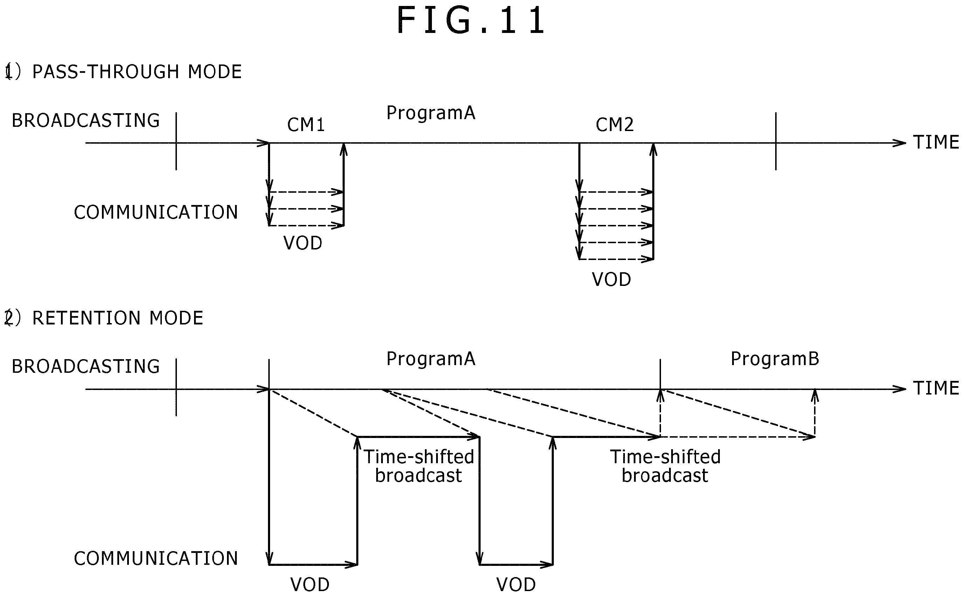

Fig. 11 is a diagram describing modes during switching between broadcasting and communication content.

It should be noted that communication content is viewed through so-called VOD (Video On Demand). Therefore, a description will be given below with viewing of communication content (communication image) also referred to as VOD as appropriate.

As shown in Fig. 11, two switching modes, namely, pass-through mode and retention mode, are used to switch between broadcasting and communication content.

A description will be given first of pass-through mode.

Pass-through mode is designed to switch to broadcasting content being broadcast at that point in time when communication content is switched back to broadcasting content following switching over to communication content for display thereof.

For example, if a given program (program A) is broadcast as broadcasting content as shown in Fig. 11, switching over to communication content may take place only when CM1 or CM2 inserted in the program is broadcast. In this case, when communication content is switched back to broadcasting content, broadcasting content is not displayed while communication content such as CM1 or CM2 is displayed. Instead, the program (Program A) being broadcast at that point in time is displayed.

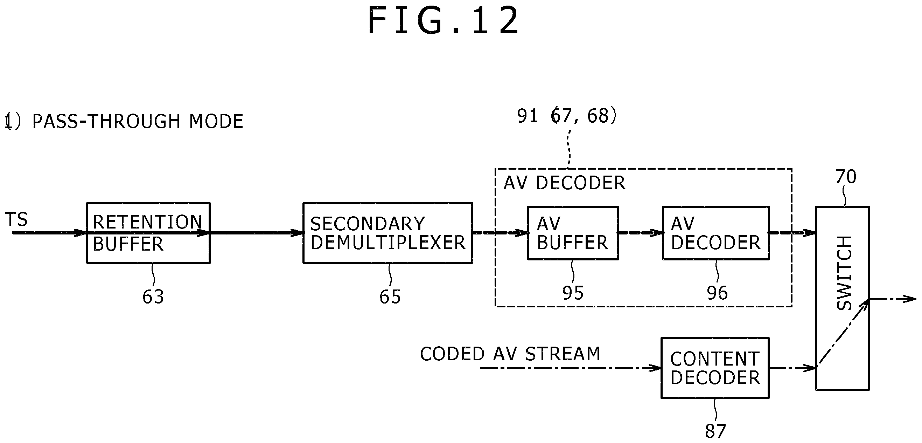

Fig. 12 is a diagram illustrating an operation example of each of the respective sections when pass-through mode is selected in the receiver 23.

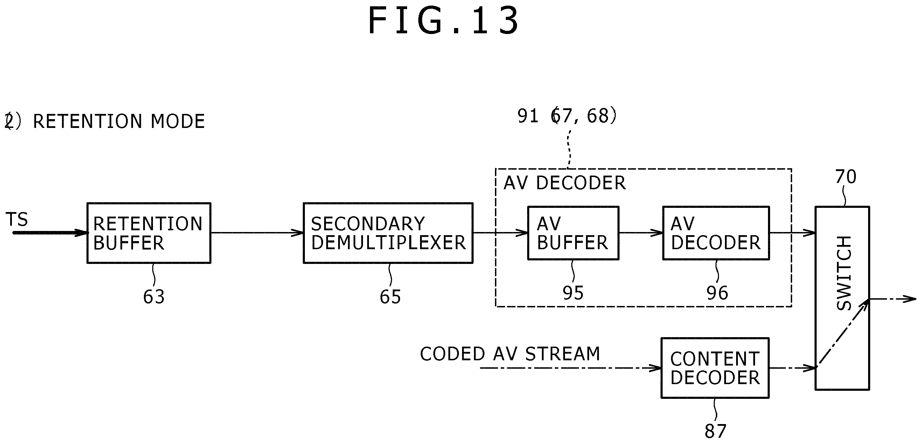

It should be noted that, in order to facilitate the description in Figs. 12 and 13, a description will be given below assuming that coded video and audio streams are decoded by an AV decoder 91 that combines the functions of the video decoder 67 and audio decoder 68. The AV decoder 91 includes an AV buffer 95 and AV decoder 96.

As shown in Fig. 12, when broadcasting content is viewed on the receiver 23, TS data is supplied from the primary demultiplexer 62 to the secondary demultiplexer 65 via the retention buffer 63 and separated into coded video and audio streams, after which the video and audio streams are supplied to the AV decoder 91.

The AV decoder 96 sequentially reads and decodes the coded video and audio streams stored in the AV buffer 95, supplying the resultant video and audio signals to the switch 70. If broadcasting content is viewed, the switch 70 supplies the video and audio signals from the AV decoder 96 to the video output section 72 and audio output section 73, respectively, via the combining section 71.

As a result, the broadcasting content is displayed on the screen. Then, trigger information of the Inject event command is received from the broadcasting apparatus 21. When the screen display switches from the broadcasting content over to the communication content as a result of firing of an event, the content decoder 87 acquires the coded AV stream of the communication content for streaming reproduction from the streaming section 85. The content decoder 87 decodes the coded AV stream, supplying the resultant video and audio signals to the switch 70. If communication content is viewed, the switch 70 supplies the video and audio signals from the content decoder 87 to the video output section 72 and audio output section 73, respectively, via the combining section 71.

As a result, the communication content is displayed on the screen.

At this time, the retention buffer 63 supplies the TS data from the primary demultiplexer 62 to the secondary demultiplexer 65 with no delay (by bypassing). Then, the broadcasting content data is not required while the communication content is displayed. Therefore, the TS data is stopped and discarded by the secondary demultiplexer 65.

It should be noted that if, for example, so-called chase reproduction is in progress at the time of switching, the TS data is stored in the retention buffer 63 to maintain a fixed delay time at the time of switching over to the communication content. Alternatively, the unnecessary TS data may be stopped and discarded by the switch 70 after decoding by the AV decoder 91 rather than stopping the TS data at the secondary demultiplexer 65.

Then, when a termination event is fired following the end of the communication content displayed on the screen, the screen display switches from the communication content back to the broadcasting content. At this time, the switch 70 switches the supply destination of the video and audio signals from the content decoder 87 over to the AV decoder 91.

At this time, the TS data stored in the retention buffer 63 is not delayed. Therefore, the video and audio signals supplied from the switch 70 respectively to the video output section 72 and audio output section 73 are not delayed, either.

That is, when the communication content is switched back to the broadcasting content, the broadcasting content being broadcast at that point in time is displayed on the screen.

Pass-through mode is performed as described above.

On the other hand, retention mode is designed to switch to broadcasting content selected at the time of switching from broadcasting content over to communication content when communication content is switched back to broadcasting content following switching over to communication content for display thereof.

For example, if a given program (program A) is broadcast as broadcasting content as shown in Fig. 11, broadcasting content may be switched to communication content at a given timing. In this case, communication content is inserted in broadcasting content, thus causing broadcasting content to be stored in the buffer (retention buffer 63) while communication content is displayed. When communication content is switched back to broadcasting content, the broadcasting content data is read from the buffer, shifting the time slot of the program (Program A) and resuming the program from where switching occurred for display.

It should be noted that if a program (Program A) broadcast in realtime ends followed by the start of another program (Program B) when communication content is switched back to broadcasting content, the program (Program A) may be resumed on the way of the program (Program A) . Alternatively, the other program (Program B) may be resumed from the beginning.

Fig. 13 is a diagram illustrating an operation example of each of the respective sections when retention mode is selected in the receiver 23. When broadcasting content is viewed on the receiver 23 shown in Fig. 13 as in the case shown in Fig. 12, the coded video and audio streams separated by the secondary demultiplexer 65 are supplied to the AV decoder 91. In the AV decoder 91, the coded video and audio streams are decoded by the AV decoder 96, supplying the resultant video and audio signals respectively to the video output section 72 and audio output section 73 via the switch 70.

As a result, the broadcasting content is displayed on the screen. Then, trigger information of the Inject_event command is received from the broadcasting apparatus 21. When the screen display switches from the broadcasting content over to the communication content as a result of firing of an event, the content decoder 87 decodes the coded video stream as in the case shown in Fig. 12, supplying the resultant video and audio signals to the video output section 72 and audio output section 73, respectively, via the switch 70.

As a result, the communication content is displayed on the screen.

At this time, the TS data from the primary demultiplexer 62 is sequentially written to the retention buffer 63 for storage. However, the reading thereof has been stopped. Therefore, the TS data is sequentially stored in the retention buffer 63 while the communication content is displayed. In the AV decoder 96, on the other hand, the AV buffer 95 may retain the coded video and audio streams that are stored therein for decoding by the AV decoder 96.

Then, when a termination event is fired following the end of the communication content displayed on the screen, the screen display switches from the communication content back to the broadcasting content. At this time, the switch 70 switches the supply destination of the video and audio signals from the content decoder 87 over to the AV decoder 91.

At this time, the retention buffer 63 retains the TS data which was stored during display of the communication content. Therefore, this TS data is supplied to the secondary demultiplexer 65 and separated into coded video and audio streams, after which the video and audio streams are supplied to the AV decoder 96. Then, the AV decoder 96 decodes the coded video and audio streams stored in the AV buffer during display of the communication content first, and then those supplied from the secondary demultiplexer 65. This ensures that the video and audio signals supplied from the switch 70 respectively to the video output section 72 and audio output section 73 are those at the time of switching from the broadcasting content over to the communication content.

That is, when the communication content is switched back to the broadcasting content, the broadcasting content at the time of switching from the broadcasting content over to the communication content is displayed on the screen.

Retention mode is performed as described above.

### [Example of Writing an Application]

A description will be given next of an example of writing an application adapted to switch between broadcasting and communication content. This application is written, for example, in a markup language such as HTML (Hyper Text Markup Language).

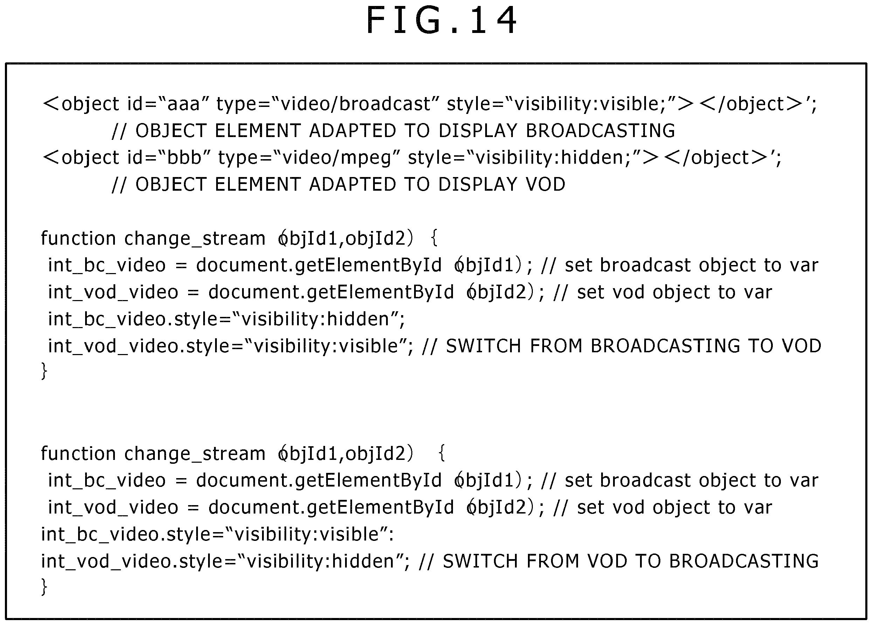

Fig. 14 is an example of writing an application in pass-through mode. id, type and style attributes are written in an Object element. Broadcasting and communication content is specified by different Object elements.

In the Object element adapted to display broadcasting content, "aaa" is written as an id attribute to identify the Object element and "video/broadcast" as a type attribute to distinguish between broadcasting and communication content. Further, "visibility:visible" is written as a style attribute to specify whether to display broadcasting or communication content.

On the other hand, "bbb" is written as an id attribute, "video/mpeg" as a type attribute and "visibility:hidden" as a style attribute in the Object element adapted to display communication content.

That is, "visibility:visible" is written as a style attribute in the Object element adapted to display broadcasting content, whereas "visibility:hidden" is written as a style attribute in the Object element adapted to display communication content. Therefore, broadcasting content is initially displayed.

On the other hand, defining retention_mode as a system attribute of the receiver 23 defined by the application in advance allows to select operation in retention mode if "retention_mode=true" is set, and operation in pass-through mode if "retention_mode=false" is set. This retention_mode is initially set to false. For an application in pass-through mode, "retention_mode=false" remains unchanged.

The change_stream function defined at the top is designed to switch displays when broadcasting content is switched over to communication content. This change_stream function hides broadcasting content and shows communication content when broadcasting content is switched over to communication content.

The change_stream function defined at the bottom is designed to switch displays when communication content is switched over to broadcasting content. This change_stream function hides communication content and shows broadcasting content when communication content is switched over to broadcasting content.

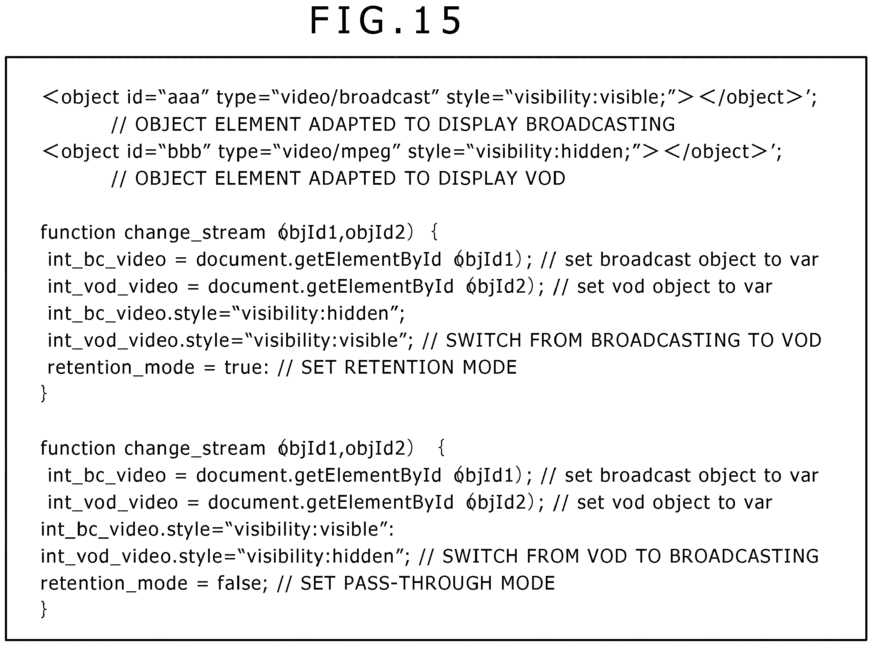

An application in pass-through mode is written as described above. Fig. 15 is an example of writing an application in retention mode. In Fig. 15, the Object elements for broadcasting and communication content are written in the same manner as in the case shown in Fig. 14. The change_stream function defined at the top is designed to switch displays when broadcasting content is switched over to communication content. This change_stream function hides broadcasting content and shows communication content when broadcasting content is switched over to communication content. Further, the retention_mode value is changed from false to true, thus selecting retention mode.

The change_stream function defined at the bottom is designed to switch displays when communication content is switched over to broadcasting content. This change_stream function hides communication content and shows broadcasting content when communication content is switched over to broadcasting content. Further, the retention_mode value is changed from true to false, canceling retention mode, to set pass-through mode. An application in retention mode is written as described above.

### [Handling of Trigger]

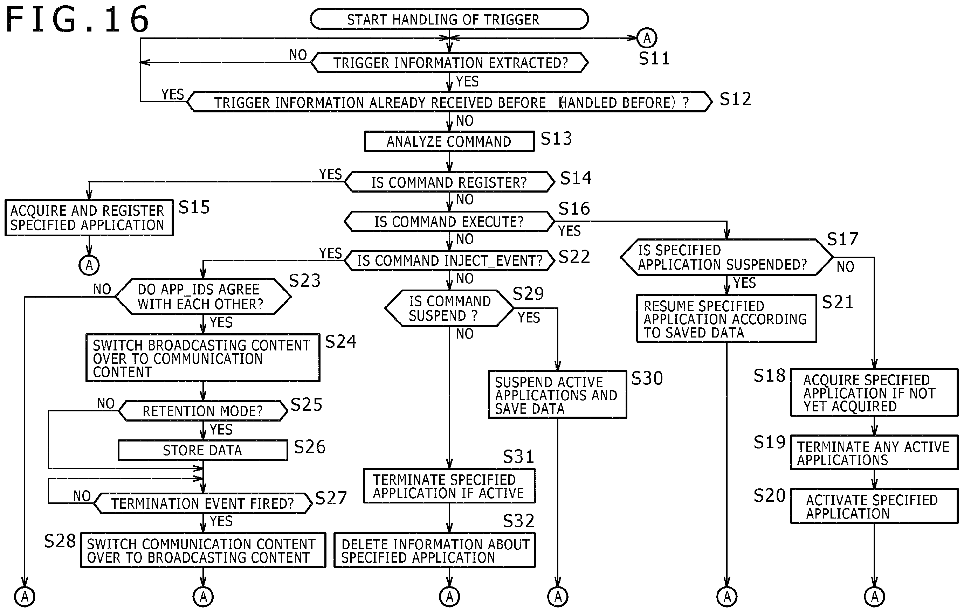

A description will be given next of the handling of trigger information performed by the receiver 23 with reference to the flowchart shown in Fig. 16.

In step S11, the control section 77 waits until trigger information is extracted and supplied by the trigger extraction section 76. Then, the process proceeds to step S12 when trigger information is supplied.

In step S12, the control section 77 reads Trigger_id from the trigger information and determines whether the process steps from step S13 and beyond have already been performed for the trigger information in question. When it is determined that the process steps from step S13 and beyond have already been performed, the process returns to step S11 to repeat the steps from there onward. In contrast, if it is determined that the process steps from step S13 and beyond have yet to be performed for the trigger information in question, the process proceeds to step S13.

In step S13, the control section 77 reads Command_code from the trigger information to determine which of Register, Execute, Inject_event, Suspend and Terminate is indicated by the trigger information in question.

In step S14, the control section 77 determines whether the command identified in step S13 is Register. When it is determined that the command is Register, the process proceeds to step S15.

In step S15, the data of the application identified by App_id of the trigger information in question is acquired and registered. Then, the process returns to step S11 to repeat the steps from there onward.

If it is determined in step S14 that the command identified in step S13 is not Register, the process proceeds to step S16. In step S16, the control section 77 determines whether the command identified in step S13 is Execute. When it is determined that the command is Execute, the process proceeds to step S17.

In step S17, the application engine 82 determines, under control of the control section 77, whether the application identified by App_id of the trigger information in question is suspended. More specifically, the application engine 82 determines that the application identified by App_id is suspended when data indicating the suspension is saved in the save memory 83B.

If it is determined in step S17 that the application identified by App_id is not suspended, the process proceeds to step S18. In step S18, the application engine 82 acquires, under control of the control section 77, the program data of the application identified by App_id if the same application has yet to be acquired (if the program data of the same application is not stored in the cache memory 81).

In step S19, the application engine 82 terminates, under control of the control section 77, any active application.

In step S20, the application engine 82 activates, under control of the control section 77, the application identified by App_id. Then, the process returns to step S11 to repeat the steps from there onward.

It should be noted that when it is determined in step S17 that the application identified by App_id is suspended, the process proceeds to step S21. In step S21, the application engine 82 moves, under control of the control section 77, the data from the save memory 83B to the work memory 83A and activates the application identified by App_id. This allows the suspended application identified by App_id to be resumed from the state in which the application was suspended. Then, the process returns to step S11 to repeat the steps from there onward. If it is determined in step S16 that the command identified in step

S13 is not Execute, the process proceeds to step S22. In step S22, the control section 77 determines whether the command identified in step S13 is Inject_event. When it is determined that the identified command is Inject_event, the process proceeds to step S23.

In step S23, the control section 77 determines whether App_id of the trigger information in question agrees with that of the active application. When the App_ids agree with each other, the process proceeds to step S24 where the control section 77 controls the application engine 82 to fire (execute) an event associated with Event_id of the trigger information in the active application. This Event_id is associated with an event adapted to switch between broadcasting and communication content.

That is, the application engine 82 performs, under control of the control section 77, a process adapted to switch the broadcasting content displayed on the screen over to communication content when the App_ids agree with each other (step S24). Here, the change_stream function written in the application is executed, thus hiding the broadcasting content and showing the communication content.

More specifically, the application engine 82 controls the communication interface 80 to receive communication content from the server 22 via the Internet 3, supplying the communication content to the streaming section 85. Further, the application engine 82 switches the supply source to the switch 86 over to the streaming section 85, allowing coded AV stream to be supplied from the streaming section 85 to the content decoder 87. The content decoder 87 separates the coded AV stream into coded video and audio streams and decodes these streams, supplying the resultant video and audio signals to the switch 70. Then, the application engine 82 switches the supply source to the switch 70 over to the content decoder 87, allowing the video and audio signals to be supplied from the content decoder 87 to the video output section 72 and audio output section 73, respectively.

It should be noted that if NRT content or communication content for downloading and reproduction is reproduced, the supply source to the switch 86 is switched over to the storage 84.

As a result, the streaming reproduction of the communication content begins.

In step S25, the application engine 82 determines whether retention mode is selected. For an application in retention mode, the retention_mode value is changed from false to true as shown, for example, in Fig. 15. In this case, therefore, it is determined that retention mode is set, and the process proceeds to step S26.

In step S26, the application engine 82 controls the retention control section 64 to sequentially store the TS data to the retention buffer 63. The operation of each of the respective sections in retention mode is as described with reference to Fig. 13.

For an application in pass-through mode, the retention_mode value remains unchanged as retention_mode=false as shown, for example, in Fig. 14. In this case, therefore, it is determined that pass-through mode is set, and the process skips step S26 and then proceeds to step S27. The operation of each of the respective sections in pass-through mode is as described with reference to Fig. 12.

In step S27, the application engine 82 determines whether a termination event (e.g., MediaStopped Event) has been fired following the end of streaming reproduction of the communication content.

If it is determined in step S27 that no termination event has been fired, the determination process in step S27 is repeated. That is, while the communication content is displayed on the screen, the TS data is sequentially stored in the retention buffer 63 in retention mode. In contrast, the retention buffer 63 is bypassed in pass-through mode.

Then, when a termination event is fired following the end of streaming reproduction of the communication content, the process proceeds to step S28. In step S28, the application engine 82 performs a process adapted to switch the communication content displayed on the screen over to broadcasting content. Here, the change_stream function written in the application is executed, thus hiding the communication content and showing the broadcasting content.

More specifically, the application engine 82 switches the supply source to the switch 70 from the content decoder 87 over to the video decoder 67 and audio decoder 68, allowing the video and audio signals to be supplied from the video decoder 67 and audio decoder 68 to the video output section 72 and audio output section 73, respectively.

At this time, in retention mode, the retention buffer 63 retains the TS data stored therein while the communication content was displayed as shown in Fig. 13. The video and audio signals obtained from this data at the time of switching from broadcasting content over to communication content are supplied respectively to the video output section 72 and audio output section 73.

That is, in retention mode, when the communication content is switched back to the broadcasting content, the broadcasting content at the time of switching from the broadcasting content over to the communication content is displayed on the screen, resuming the broadcasting content. Further, the change_stream function written in the application is executed. The retention_mode value is changed from true to false, canceling retention mode to set pass-through mode.

In pass-through mode, on the other hand, the retention buffer 63 does not store the TS data while the communication content was displayed as shown in Fig. 12. Therefore, the video and audio signals of the broadcasting content being broadcast at that point in time are supplied to the video output section 72 and audio output section 73, respectively.

That is, in pass-through mode, when the communication content is switched back to the broadcasting content, the broadcasting content being broadcast at that point in time is displayed on the screen, resuming the broadcasting content.

Then, the process returns to step S11 to repeat the steps from there onward.

If it is determined in step S22 that the command identified in step S13 is not Inject_event, the process proceeds to step S29. In step S29, the control section 77 determines whether the command identified in step S13 is Suspend. When it is determined that the identified command is Suspend, the process proceeds to step S30.

In step S30, the application engine 82 saves, under control of the control section 77, the data indicating the state of the active application (i.e., data currently written to the work memory 83A; includes information indicating the hierarchical level of displayed information if the information to be displayed has a hierarchy) to the save memory 83B. Then, the process returns to step S11 to repeat the steps from there onward.

If it is determined in step S29 that the command identified in step S13 is not Suspend, the command identified in step S13 is Terminate. Therefore, the process proceeds to step S31. In step S31, the application engine 82 terminates, under control of the control section 77, the application identified by App_id if the same application is active. In step S32, the application engine 82 deletes, under control of the control section 77, the data about the application identified by App_id from the work memory 83A and save memory 83B and deletes the program data of the application from the cache memory 81. Then, the process returns to step S11 to repeat the steps from there onward.

This completes the description of the handling of trigger information. The above handling of trigger information makes it possible to activate an application, fire an event or terminate an application in response to a television program or CM. Further, it is possible to switch broadcasting content over to communication content when an event is fired and to resume the broadcasting content from where switching occurred when the communication content is switched back to the broadcasting content if retention mode is selected.

### [Use Cases]

A description will be given next of examples of services made available by the present technology.

Major electric appliance sales chain A, a sponsor of a given program of broadcasting station X, is considering introducing loss leaders at each of its stores closest to the viewers in the CM inserted in the program.

Such a service can be implemented by changing the CM inserted in a program so that it is tailored to the profile of the viewer. That is, when the CM is inserted in a given program, the CM image is switched from the image of broadcasting content to that of communication content reproduced through streaming, thus allowing each viewer to view the CM intended for that viewer. Alternatively, the CM image may be stored in the storage 84 as NRT or communication content so that the image of broadcasting content is switched over to that of the content stored in the storage 84.

As a result, a person living in city P will see, for example, a large-size TV set and refrigerator being introduced as special offers available for a limited time of the day at store 'a' closest to him or her in the CM of the program he or she is viewing. On the other hand, another person living in city Q will see, for example, a washing machine and air conditioner being introduced as bargain offers arising from inventory disposal at store 'b' closest to him or her in the same CM.

As described above, it is possible to provide information useful to each of the viewers without the viewers being aware thereof.

Further, news broadcast in a news program may be provided sometimes in a complete version (long version) and other times in an ordinary version (short version).

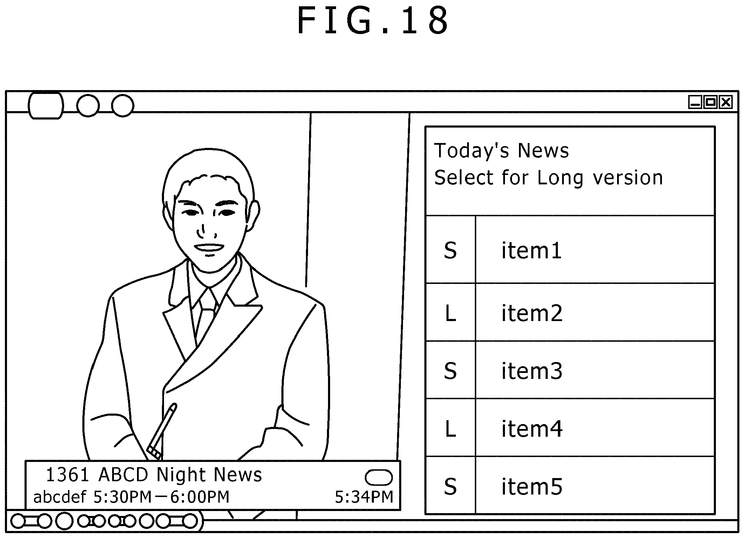

As illustrated in Fig. 18, for example, a list of news items which will be broadcast appears on the screen in advance in a morning news on broadcasting station Y. Here, when the viewer makes an operation to check one of the news items he or she wishes to know more about, that news item will be reproduced in a complete version. In the case shown in Fig. 18, for example, of the new items shown as item 1 to item 5, items 2 and 4 are selected, thus allowing these items to be reproduced in a complete version. In this case, items 2 and 4 that are broadcast in a complete version and items 1, 3 and 5 that are broadcast in an ordinary version are connected together as a whole, thus making up a single news program.

Further, for example, a person did not select any of the news items. Therefore, all the items are broadcast in an ordinary version. As a result, it takes an hour to view the program. That person begins to view a drama that is broadcast next after having viewed the news. On the other hand, another person selected item 5. Therefore, item 5 is reproduced in a complete version. As a result, it takes an hour and 20 minutes to view the news program. In one hour after he or she began to view the news program, a drama is displayed on the subscreen. As a result, that person stopped viewing the news program to view the drama. That is, in this case, broadcasting content is displayed on the subscreen while communication content is displayed, thus allowing to switch from the communication content over to the broadcasting content if one wishes to view the broadcasting content.

As described above, switching between broadcasting content and communication content (insertion content) as appropriate makes it possible to provide high quality services.

### [Configuration Example of the Computer]

Incidentally, the above series of processes may be performed by hardware or software. If the series of processes are performed by software, the program making up the software is installed from a program recording media to a computer incorporated in dedicated hardware or a general-purpose personal computer capable of performing various functions when installed with various programs.

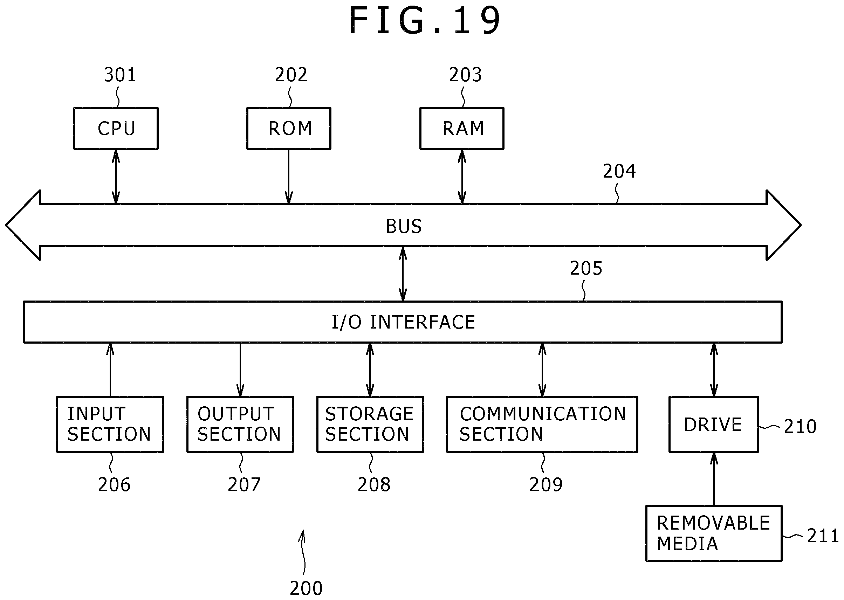

Fig. 19 illustrates a configuration example of computer hardware adapted to perform the above series of processes using a program.

In a computer 200, a CPU (Central Processing Unit) 201, ROM (Read Only Memory) 202 and RAM (Random Access Memory) 203 are connected to each other via a bus 204.

An I/O interface 205 is also connected to the bus 204. An input section 206, output section 207, storage section 208, communication section 209 and drive 210 are connected to the I/O interface 205. The input section 206 includes, for example, a keyboard, mouse and microphone. The output section 207 includes, for example, a display and speaker. The storage section 208 includes, for example, a harddisk or non-volatile memory. The communication section 209 includes, for example, a network interface. The drive 210 drives a removable media 211 such as magnetic disk, optical disk, magneto-optical disk, or semiconductor memory.

In the computer configured as described above, the CPU 201 loads the program from the storage section 208 into the RAM 203 for execution via the I/O interface 205 and bus 204, thus performing the above series of processes.

It should be noted that the program executed by the computer may perform the processes chronologically according to the sequence described in the present specification or perform the processes in parallel or when necessary as when invoked.

On the other hand, the program may be handled by a single computer or by a plurality of computers in a distributed manner. Further, the program may be transferred to a remote computer for execution.

It should be noted that the term "system" in the present specification refers to an apparatus as a whole made up of a plurality of devices. Further, the embodiment of the present technology is not limited to that described above, but may be modified in various manners without departing from the scope of the present technology.

### [Reference Signs List]

- 1: Broadcasting system
- 2: Broadcasting network
- 3: Internet
- 21: Broadcasting apparatus
- 22: Server
- 23: Receiver
- 61: Tuner
- 62: Primary demultiplexer
- 63: Retention buffer
- 64: Retention control section
- 65: Secondary demultiplexer
- 67: Video decoder
- 68: Audio decoder
- 70: Switch
- 71: Combining section
- 72: Video output section
- 73: Audio output section
- 76: Trigger extraction section
- 77: Control section
- 80: Communication interface
- 82: Application engine
- 200: Computer
- 201: CPU

## Claims

1. A receiver comprising:
a reception section (61) adapted to receive, via a broadcasting network, broadcasting content broadcast via the broadcasting network;
an acquisition section (69) adapted to acquire, during reception of the broadcasting content, insertion content for switching between the broadcasting content and the insertion content;
a switching section (70) adapted to switch between the broadcasting content and the insertion content and to supply either the broadcasting content, if the switching section (70) has switched over to the broadcasting content, or the insertion content, if the switching section (70) has switched over to the insertion content, to an output section (72, 73);
the output section (72, 73) adapted to output either the broadcasting content or the insertion content as supplied from the switching section;
a buffer (95) adapted to sequentially store data of the received broadcasting content if the broadcasting content is switched over to the insertion content, wherein
the switching section (70) is adapted to switch between the broadcast content and insertion content in two modes including a pass-through mode and a retention mode, and wherein in the pass-through mode, when switching back from the insertion content to the broadcast content, the output section outputs the broadcast content being received at that point in time, while in the retention mode, when switching back from the insertion content to the broadcast content, the output section outputs the broadcast content stored in the buffer;
a trigger extraction section (76) adapted to extract trigger information from the received broadcasting content, the trigger information including identification information of an application program to be executed by the receiver and a command code indicating one of several commands relating to the operation of the application program and causing the receiver to perform an operation associated with the command, the command causing the receiver to acquire and register the application program, activate the application program, inject an event, suspend the application program or terminate the application program;
a control section (77) configured to read the command code from the trigger information to determine which command is indicated by the command code; and
an application engine (82) configured
to acquire and register the application program identified by identification information included in the trigger information, if the command is causing the receiver to acquire and register the application program, and
to activate the application program identified by identification information included in the trigger information, if the command is causing the receiver to activate the application program, and
to suspend the application program identified by identification information included in the trigger information, if the command is causing the receiver to suspend the application program, and
to terminate the application program identified by identification information included in the trigger information, if the command is causing the receiver to terminate the application program,
wherein, if i) the command indicated by the command code is an inject an event command in an activated application program and ii) identification information of the application program included in the trigger information agrees with that of the activated application program, the acquisition section (69) is adapted to acquire the insertion content and the switching section (70) is adapted to switch from the broadcast content to the insertion content.

2. The receiver of claim 1, wherein the switching section (70) is adapted to switch the insertion content over to the broadcasting content if the insertion content ends.

3. The receiver of any preceding claim, wherein the insertion content comprises communication content acquired via a communication network and reproduced through streaming.

4. The receiver of any preceding claim, wherein the insertion content comprises NRT, Non Real Time, content of NRT broadcasting acquired via the broadcasting network and stored and/or communication content acquired via a communication network and downloaded and reproduced.

5. A reception method of a receiver, the reception method comprising the steps of:
receiving, via a broadcasting network, broadcasting content broadcast via the broadcasting network;
acquiring, during reception of the broadcasting content, insertion content for switching between the broadcasting content and the insertion content;
switching between the broadcasting content and the insertion content and supplying either the broadcasting content, if it has been switched over to the broadcasting content, or the insertion content, if it has been switched over to the insertion content, to a step of outputting;
outputting either the broadcasting content or the insertion content as supplied from the step of switching;
sequentially storing data of the received broadcasting content in a buffer if the broadcasting content is switched over to the insertion content;
wherein the switching is adapted to to switch between the broadcast content and insertion content in two modes including a pass-through mode and a retention mode, and wherein in the pass-through mode, when switching back from the insertion content to the broadcast content, the broadcast content being received at that point in time is output, while in the retention mode, when switching back from the insertion content to the broadcast content, the broadcast content stored in the buffer is output;
extracting trigger information from the received broadcasting content, the trigger information including identification information of an application program to be executed by the receiver and a command code indicating one of several commands relating to the operation of the application program and causing the receiver to perform an operation associated with the command, the command causing the receiver to acquire and register the application program, activate the application program, inject an event, suspend the application program or terminate the application program;
reading the command code from the trigger information to determine which command is indicated by the command code;
acquiring and registering the application program identified by identification information included in the trigger information, if the command is causing the receiver to acquire and register the application program; and
activating the application program identified by identification information included in the trigger information, if the command is causing the receiver to activate the application program; and
suspending the application program identified by identification information included in the trigger information, if the command is causing the receiver to suspend the application program; and
terminating the application program identified by identification information included in the trigger information, if the command is causing the receiver to acquire and terminate the application program,
wherein, if i) the command indicated by the command code is an inject an event command in an activated application program and ii) identification information of the application program included in the trigger information agrees with that of the activated application program, the insertion content is acquired and it is switched from the broadcast content to the insertion content.

6. The reception method of claim 5, wherein switching between the broadcasting and insertion content comprises switching the insertion content over to the broadcasting content if the insertion content ends.

7. The reception method of claim 5 or 6 wherein the insertion content comprises communication content acquired via a communication network and reproduced through streaming and/or NRT, Non Real Time, content of NRT broadcasting acquired via the broadcasting network and stored and/or communication content acquired via a communication network and downloaded and reproduced.

8. A program for controlling the receiver of any one of claims 1-4, the program causing the receiver to perform a process comprising the steps of the method defined in any one of claims 5 to 7.

9. A television receiver comprising a receiver as claimed in any one of claims 1 to 4.

## Patentansprüche

1. Empfänger, welcher umfasst:
eine Empfangseinheit (61), die ausgestaltet ist, über ein Übertragungsnetzwerk Übertragungsinhalt zu empfangen, welcher über das Übertragungsnetzwerk übertragen wird;
eine Erfassungseinheit (69), die ausgestaltet ist, während des Empfangs des Übertragungsinhalts Einfügungsinhalt zum Umschalten zwischen dem Übertragungsinhalt und dem Einfügungsinhalt zu erfassen;
eine Schalteinheit (70), die ausgestaltet ist, zwischen dem Übertragungsinhalt und dem Einfügungsinhalt umzuschalten und entweder den Übertragungsinhalt, wenn die Schalteinheit (70) auf den Übertragungsinhalt umgeschaltet hat, oder den Einfügungsinhalt, wenn die Schalteinheit (70) auf den Einfügungsinhalt umgeschaltet hat, an eine Ausgabeeinheit (72, 73) bereitzustellen;
die Ausgabeeinheit (72, 73), die ausgestaltet ist, entweder den Übertragungsinhalt oder den Einfügungsinhalt, wie von der Schalteinheit bereitgestellt, auszugeben;
einen Pufferspeicher (95), der ausgestaltet ist, sequentiell Daten des empfangenen Übertragungsinhalts zu speichern, wenn der Übertragungsinhalt auf den Einfügungsinhalt umgeschaltet wird,
wobei die Schalteinheit (70) ausgestaltet ist, zwischen dem Übertragungsinhalt und dem Einfügungsinhalt in zwei Modi umzuschalten, einschließlich eines Durchgangsmodus und eines Rückhaltemodus, und wobei im Durchgangsmodus beim Zurückschalten von dem Einfügungsinhalt zu dem Übertragungsinhalt die Ausgabeeinheit den zu diesem Zeitpunkt empfangenen Übertragungsinhalt ausgibt, während im Rückhaltemodus beim Zurückschalten von dem Einfügungsinhalt zu dem Übertragungsinhalt die Ausgabeeinheit den im Pufferspeicher gespeicherten Übertragungsinhalt ausgibt;
eine Triggerextraktionseinheit (76), die ausgestaltet ist, Triggerinformationen aus dem empfangenen Übertragungsinhalt zu extrahieren, wobei die Triggerinformationen Identifikationsinformationen eines vom Empfänger auszuführenden Anwendungsprogramms und einen Befehlscode, der einen von mehreren Befehlen in Bezug auf den Betrieb des Anwendungsprogramms angibt und den Empfänger veranlasst, einen dem Befehl zugeordneten Vorgang auszuführen, umfassen, wobei der Befehl den Empfänger veranlasst, das Anwendungsprogramm zu erfassen und zu registrieren, das Anwendungsprogramm zu aktivieren, ein Ereignis zu injizieren,das Anwendungsprogramm auszusetzen oder das Anwendungsprogramm zu beenden;
eine Steuereinheit (77), die ausgestaltet ist, den Befehlscode aus den Triggerinformationen zu lesen, um zu bestimmen, welcher Befehl durch den Befehlscode angegeben wird; und
eine Anwendungsmaschine (82), die ausgestaltet ist,
das Anwendungsprogramm, welches durch Identifikationsinformationen, die in den Triggerinformationen enthalten sind, identifiziert wird, zu erfassen und zu registrieren, wenn der Befehl den Empfänger veranlasst, das Anwendungsprogramm zu erfassen und zu registrieren, und
das Anwendungsprogramm, welches durch Identifikationsinformationen, die in den Triggerinformationen enthalten sind, identifiziert wird, zu aktivieren, wenn der Befehl den Empfänger veranlasst, das Anwendungsprogramm zu aktivieren, und
das Anwendungsprogramm, welches durch Identifikationsinformationen, die in den Triggerinformationen enthalten sind, identifiziert wird, auszusetzen, wenn der Befehl den Empfänger veranlasst, das Anwendungsprogramm auszusetzen, und
das Anwendungsprogramm, welches durch Identifikationsinformationen, die in den Triggerinformationen enthalten sind, identifiziert wird, zu beenden, wenn der Befehl den Empfänger veranlasst, das Anwendungsprogramm zu beenden,
wobei, wenn i) der durch den Befehlscode angegebene Befehl ein Ereignisinjektionsbefehl in einem aktivierten Anwendungsprogramm ist und ii) Identifikationsinformationen des in den Triggerinformationen enthaltenen Anwendungsprogramms mit denen des aktivierten Anwendungsprogramms übereinstimmen, die Erfassungseinheit (69) zum Erfassen des Einfügungsinhalts und die Schalteinheit (70) zum Umschalten von Übertragungsinhalt auf Einfügungsinhalt ausgestaltet sind.

2. Empfänger nach Anspruch 1, wobei
die Schalteinheit (70) ausgestaltet ist, den Einfügungsinhalt auf den Übertragungsinhalt umzuschalten, wenn der Einfügungsinhalt endet.

3. Empfänger eines vorangegangenen Anspruchs, wobei
der Einfügungsinhalt Kommunikationsinhalt, welcher über ein Kommunikationsnetzwerk erfasst und durch Streaming wiedergegeben wird, umfasst.

4. Empfänger eines vorangegangenen Anspruchs, wobei
der Einfügungsinhalt über das Übertragungsnetzwerk erfassten und gespeicherten NRT, Nicht-Echtzeit, -Inhalt einer NRT-Übertragung und/oder über ein Kommunikationsnetz erfassten, heruntergeladenen und reproduzierten Kommunikationsinhalt umfasst.

5. Empfangsverfahren eines Empfängers, wobei das Empfangsverfahren die Schritte aufweist:
Empfangen von Übertragungsinhalt, welcher über ein Übertragungsnetzwerk übertragen wird, über das Übertragungsnetzwerk;
Erfassen von Einfügungsinhalt während des Empfangs des Übertragungsinhalts zum Umschalten zwischen dem Übertragungsinhalt und dem Einfügungsinhalt;
Umschalten zwischen Übertragungsinhalt und Einfügungsinhalt und Bereitstellen entweder des Einfügungsinhalts, wenn auf den Übertragungsinhalt umgeschaltet wurde, oder des Einfügungsinhalts, wenn auf den Einfügungsinhalt umgeschaltet wurde, an einen Ausgabeschritt;
Ausgeben von entweder dem Übertragungsinhalt oder dem Einfügungsinhalt, wie von dem Ausgabeschritt bereitgestellt;
Sequentielles Speichern von Daten des empfangenen Übertragungsinhalts in einem Pufferspeicher, wenn der Übertragungsinhalt auf den Einfügungsinhalt umgeschaltet wird;
wobei das Umschalten ausgestaltet ist, zwischen dem Übertragungsinhalt und dem Einfügungsinhalt in zwei Modi umzuschalten, einschließlich eines Durchgangsmodus und eines Rückhaltemodus, und wobei im Durchgangsmodus beim Zurückschalten von dem Einfügungsinhalt zu dem Übertragungsinhalt die Ausgabeeinheit den zu diesem Zeitpunkt empfangenen Übertragungsinhalt ausgibt, während im Rückhaltemodus beim Zurückschalten von dem Einfügungsinhalt zu dem Übertragungsinhalt die Ausgabeeinheit den im Pufferspeicher gespeicherten Übertragungsinhalt ausgibt;
Extrahieren von Triggerinformationen aus dem empfangenen Übertragungsinhalt, wobei die Triggerinformationen Identifikationsinformationen eines vom Empfänger auszuführenden Anwendungsprogramms und einen Befehlcode, der einen von mehreren Befehlen in Bezug auf den Betrieb des Anwendungsprogramms angibt und den Empfänger veranlasst, einen dem Befehl zugeordneten Vorgang auszuführen, umfassen, wobei der Befehl den Empfänger veranlasst, das Anwendungsprogramm zu erfassen und zu registrieren, das Anwendungsprogramm zu aktivieren, ein Ereignis zu injizieren, das Anwendungsprogramm auszusetzen oder das Anwendungsprogramm zu beenden;
Lesen des Befehlscode aus den Triggerinformationen, um zu bestimmen, welcher Befehl durch den Befehlscode angegeben wird;
Erfassen und Registrieren des Anwendungsprogramms, welches durch Identifikationsinformationen, die in den Triggerinformationen enthalten sind, identifiziert wird, wenn der Befehl den Empfänger veranlasst, das Anwendungsprogramm zu erfassen und zu registrieren; und
Aktivieren des Anwendungsprogramms, welches durch Identifikationsinformationen, die in den Triggerinformationen enthalten sind, identifiziert wird, wenn der Befehl den Empfänger veranlasst, das Anwendungsprogramm zu aktivieren; und
Aussetzen des Anwendungsprogramms, welches durch Identifikationsinformationen, die in den Triggerinformationen enthalten sind, identifiziert wird, wenn der Befehl den Empfänger veranlasst, das Anwendungsprogramm auszusetzen; und
Beenden des Anwendungsprogramms, welches durch Identifikationsinformationen, die in den Triggerinformationen enthalten sind, identifiziert wird, wenn der Befehl den Empfänger veranlasst, das Anwendungsprogramm zu erfassen und zu beenden,
wobei, wenn i) der durch den Befehlscode angegebene Befehl ein Ereignisinjektionsbefehl in einem aktivierten Anwendungsprogramm ist und ii) Identifikationsinformationen des in den Triggerinformationen enthaltenen Anwendungsprogramms mit denen des aktivierten Anwendungsprogramms übereinstimmen, der Einfügungsinhalt erfasst und vom Übertragungsinhalt auf den Einfügungsinhalt umgeschaltet wird.

6. Empfangsverfahren nach Anspruch 5, wobei
das Umschalten zwischen dem Übertragungsinhalt und dem Einfügungsinhalt das Umschalten des Einfügungsinhalts auf den Übertragungsinhalt umfasst, wenn der Einfügungsinhalt endet.

7. Empfangsverfahren nach einem der Ansprüche 5 oder 6, wobei
der Einfügungsinhalt über ein Kommunikationsnetzwerk erfassten und über Streaming reproduzierten Kommunikationsinhalt und/oder über das Übertragungsnetzwerk erfassten und gespeicherten NRT, Nicht-Echtzeit, -Inhalt einer NRT-Übertragung und/oder über ein Kommunikationsnetz erfassten, heruntergeladenen und reproduzierten Kommunikationsinhalt umfasst.

8. Programm zum Steuern des Empfängers nach einem der Ansprüche 1 bis 4, wobei das Programm einen Computer des Empfängers veranlasst, einen Prozess durchzuführen, der die Schritte des in einem der Ansprüche 5 bis 7 definierten Verfahrens umfasst.

9. Fernsehempfänger, der einen Empfänger umfasst, wie in einem der Ansprüche 1 bis 4 beansprucht wird.

## Revendications

1. Récepteur comprenant :
une section de réception (61) conçue pour recevoir, par le biais d'un réseau de diffusion, un contenu de diffusion diffusé par le biais du réseau de diffusion ;
une section d'acquisition (69) conçue pour acquérir, durant la réception du contenu de diffusion, un contenu d'insertion pour commuter entre le contenu de diffusion et le contenu d'insertion ;
une section de commutation (70) conçue pour commuter entre le contenu de diffusion et le contenu d'insertion et pour fournir le contenu de diffusion, si la section de commutation (70) a basculé vers le contenu de diffusion, ou le contenu d'insertion, si la section de commutation (70) a basculé vers le contenu d'insertion, à une section de sortie (72, 73) ;
la section de sortie (72, 73) conçue pour délivrer le contenu de diffusion ou le contenu d'insertion fourni à partir de la section de commutation ;
une mémoire tampon (95) conçue pour stocker séquentiellement les données du contenu de diffusion reçu si le contenu de diffusion est basculé vers le contenu d'insertion,
la section de commutation (70) étant conçue pour commuter entre le contenu de diffusion et le contenu d'insertion selon deux modes dont un mode de transfert et un mode de rétention, et dans le mode de transfert, lors du retour depuis le contenu d'insertion vers le contenu de diffusion, la section de sortie délivrant le contenu diffusé reçu à ce stade, tandis que dans le mode de rétention, lors du retour depuis le contenu d'insertion vers le contenu de diffusion, la section de sortie délivrant le contenu de diffusion stocké dans la mémoire tampon ;
une section d'extraction de déclenchement (76) conçue pour extraire des informations de déclenchement à partir du contenu de diffusion reçu, les informations de déclenchement comportant des informations d'identification d'un programme d'application devant être exécuté par le récepteur et un code de commande indiquant une commande parmi plusieurs commandes concernant le fonctionnement du programme d'application et amenant le récepteur à exécuter une opération associée à la commande, la commande amenant le récepteur à acquérir et à enregistrer le programme d'application, activer le programme d'application, injecter un événement, suspendre le programme d'application ou terminer le programme d'application ;
une section de contrôle (77) configurée pour lire le code de commande à partir des informations de déclenchement pour déterminer quelle commande est indiquée par le code de commande ; et
un moteur d'application (82) configuré pour acquérir et enregistrer le programme d'application identifié par des informations d'identification incluses dans les informations de déclenchement, si la commande amène le récepteur à acquérir et à enregistrer le programme d'application, et
activer le programme d'application identifié par des informations d'identification incluses dans les informations de déclenchement, si la commande amène le récepteur à activer le programme d'application, et
suspendre le programme d'application identifié par des informations d'identification incluses dans les informations de déclenchement, si la commande amène le récepteur à suspendre le programme d'application, et
terminer le programme d'application identifié par des informations d'identification incluses dans les informations de déclenchement, si la commande amène le récepteur à terminer le programme d'application,
si i) la commande indiquée par le code de commande est une commande Injecter un événement dans un programme d'application activé et ii) des informations d'identification du programme d'application incluses dans les informations de déclenchement correspondent à celles du programme d'application activé, la section d'acquisition (69) étant conçue pour acquérir le contenu d'insertion et la section de commutation (70) étant conçue pour commuter depuis le contenu de diffusion vers le contenu d'insertion.

2. Récepteur selon la revendication 1, dans lequel la section de commutation (70) est conçue pour commuter le contenu d'insertion vers le contenu de diffusion si le contenu d'insertion prend fin.

3. Récepteur selon l'une quelconque des revendications précédentes, dans lequel le contenu d'insertion comprend un contenu de communication acquis par le biais d'un réseau de communication et reproduit par l'intermédiaire d'une diffusion en continu.

4. Récepteur selon l'une quelconque des revendications précédentes, dans lequel le contenu d'insertion comprend un contenu NRT, non temps réel, de diffusion NRT acquis par le biais du réseau de diffusion et stocké et/ou un contenu de communication acquis par le biais d'un réseau de communication et téléchargé et reproduit.

5. Procédé de réception d'un récepteur, le procédé de réception comprenant les étapes suivantes :
recevoir, par le biais d'un réseau de diffusion, un contenu de diffusion diffusé par le biais du réseau de diffusion ;
acquérir, durant la réception du contenu de diffusion, un contenu d'insertion pour commuter entre le contenu de diffusion et le contenu d'insertion ;
commuter entre le contenu de diffusion et le contenu d'insertion et fournir le contenu de diffusion, s'il a été basculé vers le contenu de diffusion, ou le contenu d'insertion, s'il a été basculé vers le contenu d'insertion, à une étape de sortie ;
délivrer le contenu de diffusion ou le contenu d'insertion fourni à partir de l'étape de commutation ;
stocker séquentiellement les données du contenu de diffusion reçu dans une mémoire tampon si le contenu de diffusion est basculé vers le contenu d'insertion,
la commutation étant conçue pour commuter entre le contenu de diffusion et le contenu d'insertion selon deux modes dont un mode de transfert et un mode de rétention, et dans le mode de transfert, lors du retour depuis le contenu d'insertion vers le contenu de diffusion, le contenu de diffusion reçu à ce stade étant délivré, tandis que dans le mode de rétention, lors du retour depuis le contenu d'insertion vers le contenu de diffusion, le contenu de diffusion stocké dans la mémoire tampon étant délivré ;
extraire des informations de déclenchement à partir du contenu de diffusion reçu, les informations de déclenchement comportant des informations d'identification d'un programme d'application devant être exécuté par le récepteur et un code de commande indiquant une commande parmi plusieurs commandes concernant le fonctionnement du programme d'application et amenant le récepteur à exécuter une opération associée à la commande, la commande amenant le récepteur à acquérir et à enregistrer le programme d'application, activer le programme d'application, injecter un événement, suspendre le programme d'application ou terminer le programme d'application ;
lire le code de commande à partir des informations de déclenchement pour déterminer quelle commande est indiquée par le code de commande ;
acquérir et enregistrer le programme d'application identifié par des informations d'identification incluses dans les informations de déclenchement, si la commande amène le récepteur à acquérir et à enregistrer le programme d'application ; et
activer le programme d'application identifié par des informations d'identification incluses dans les informations de déclenchement, si la commande amène le récepteur à activer le programme d'application ; et
suspendre le programme d'application identifié par des informations d'identification incluses dans les informations de déclenchement, si la commande amène le récepteur à suspendre le programme d'application ; et
terminer le programme d'application identifié par des informations d'identification incluses dans les informations de déclenchement, si la commande amène le récepteur à acquérir et à terminer le programme d'application,
si i) la commande indiquée par le code de commande est une commande Injecter un événement dans un programme d'application activé et ii) des informations d'identification du programme d'application incluses dans les informations de déclenchement correspondent à celles du programme d'application activé, le contenu d'insertion étant acquis et étant commuté depuis le contenu de diffusion vers le contenu d'insertion.

6. Procédé de réception selon la revendication 5, dans lequel l'étape de commutation entre le contenu de diffusion et le contenu d'insertion comprend basculer le contenu d'insertion vers le contenu de diffusion si le contenu d'insertion prend fin.

7. Procédé de réception selon la revendication 5 ou 6, dans lequel le contenu d'insertion comprend un contenu de communication acquis par le biais d'un réseau de communication et reproduit par l'intermédiaire d'une diffusion en continu et/ou un contenu NRT, non temps réel, de diffusion NRT acquis par le biais du réseau de diffusion et stocké et/ou un contenu de communication acquis par le biais d'un réseau de communication et téléchargé et reproduit.

8. Programme permettant de contrôler le récepteur de l'une quelconque des revendications 1-4, le programme amenant le récepteur à exécuter un processus comprenant les étapes du procédé défini dans l'une quelconque des revendications 5 à 7.

9. Récepteur de télévision comprenant un récepteur selon l'une quelconque des revendications 1 à 4.
